# EUROPEAN PATENT SPECIFICATION

(11) **EP 4 523 236 B1**
(45) Date of publication and mention of the grant of the patent: **25.11.2026**
(21) Application number: 23804419.2
(22) Date of filing: 03.05.2023
(51) Int. Cl.: H01H 13/704, C08G 63/185, C08G 63/199, C08K 5/1535, C08G 63/181, C08L 67/02, C08K 3/013, C08K 7/14, C08K 7/06, C08G 63/183, C08K 3/34

(54) **KEYCAPS COMPRISING FURANOATE POLYESTERS**
TASTENKAPPE ENTHALTEND FURANOATPOLYESTER
DESSUS DE TOUCHE COMPRENANT DES POLYESTERS FURANOATE

(30) Priority: 10.05.2022 US 202263364465 P; 12.12.2022 US 202263387039 P
(43) Date of publication of application: 19.03.2025
(73) Proprietor: Yazaki Corporation, Tokyo 108-0075 (JP)
(72) Inventor: MAAT, Stefan, Camarillo, California 93012 (US); TIWARI, Rajkiran, Camarillo, California 93012 (US)
(74) Representative: Schüssler, Andrea
(86) International application number: PCT/US2023/066547
(87) International publication number: WO 2023/220539

(56) References cited:
- WO-A1-2020/254715
- US-A- 4 900 610
- US-A1- 2012 220 680
- US-B1- 6 322 875
- JIANHUI ZHU ET AL: "Poly(butylene 2,5-furan dicarboxylate), a Biobased Alternative to PBT: Synthesis, Physical Properties, and Crystal Structure", MACROMOLECULES, vol. 46, no. 3, 12 February 2013 (2013-02-12), US, pages 796 - 804, XP055614034, ISSN: 0024-9297, DOI: 10.1021/ma3023298
- POULOPOULOU NIKI ET AL: "Towards increased sustainability for aromatic polyesters: Poly(butylene 2,5-furandicarboxylate) and its blends with poly(butylene terephthalate)", POLYMER, ELSEVIER, AMSTERDAM, NL, vol. 212, 22 October 2020 (2020-10-22), XP086431819, ISSN: 0032-3861, [retrieved on 20201022], DOI: 10.1016/J.POLYMER.2020.123157
- POULOPOULOU NIKI ET AL: "Green polymeric materials: On the dynamic homogeneity and miscibility of furan-based polyester blends", POLYMER, vol. 174, 12 June 2019 (2019-06-12), pages 187 - 199, XP085700471, ISSN: 0032-3861, DOI: 10.1016/J.POLYMER.2019.04.058
- KAINULAINEN ET AL.: "Utilizing Furfural-Based Bifuran Diester as Monomer and Comonomer for High-Performance Bioplastics: Properties of Poly(butylene furanoate), Poly(butylene bifuranoate), and Their Copolyesters", BIOMACROMOLECULES, vol. 21, 2 December 2019 (2019-12-02), pages 743 - 752, XP009519222, Retrieved from the Internet <URL:https://pubs.acs.org/doi/10.1021/acs.biomac.9b01447> DOI: 10.1021/acs.biomac.9b01447

## Description

### TECHNICAL FIELD

The disclosed teachings relate to keycaps made of bio-based materials.

### BACKGROUND

An alphanumeric keyboard is a critical input periphery or integrated part of any modern computer and is used to enter information in the form of characters consisting of letters, numbers and other special characters. Alphanumeric keyboards typically have 80 to 110 buttons or keys which are labeled with one or more characters. Pressing an individual or a combination of buttons on the keyboard will enter a desired character.

The number keys are typically found across the top of the keyboard and usually are also found on the right side of larger keyboards. The letter keys are typically found in the center of the keyboard. Modern keyboards also include a control processor and indicator lights to provide feedback to the user about the state the keyboard is in and if certain keys have been activated, for example the "caps lock" key.

Each key of a keyboard generally comprises a durable switch. A variety of keyboard types with various switch technologies have been developed such as membrane, dome-switch, scissor-switch, capacitive, mechanical, magnetic Hall effect, or optical. Each type comes with its advantages and disadvantages, but generally the choice of switch technology affects key response (the positive feedback that a key has been pressed) and pre-travel (the distance needed to push the key to enter a character reliably).

For example, in a mechanical switch keyboard every key contains a complete switch underneath a keycap. Each switch is composed of a housing, a spring, and a stem, and sometimes other parts such as a separate tactile leaf or a click bar. Mechanical switches (www.wikiwand.com/en/List_of_keyboard_switches) come in three variants: "linear" with consistent resistance, "tactile" with a non-audible bump, and "clicky" with both a bump and an audible click. Depending on the resistance of the spring, the key requires different amounts of pressure to actuate and to bottom out.

Another example are dome-switch keyboards. In this design, a top membrane with circuit traces and contact pads on the bottom and a bottom membrane with circuit traces and contact pads on the top are separated by a center membrane with holes. Keycaps mounted on rubber domes are located above the top membrane. When a keycap is pressed, the circuits of the top and bottom membranes contact one another.

Yet another example are scissor switch keyboards. In this design, the keycaps are attached to the keyboard via two plastic pieces that interlock in a "scissor"-like fashion, and snap to the keyboard and the key. It uses rubber domes like the dome switch keyboard, but a special plastic 'scissors' mechanism (www.wikiwand.com/en/Scissors_mechanism) links the keycap (www.wikiwand.com/en/Keycap) to a plunger that depresses the rubber dome with a much shorter travel than the typical rubber dome keyboard. Typically scissor-switch keyboards also employ 3-layer membranes as the electrical component of the switch.

What is common to the keyboard designs listed above is that keycaps, which are labeled with the respective characters, are mounted on top of the switches. These keycaps typically can be removed for cleaning of the switch mechanism and replacement of damaged or worn-out keycaps.

While modern keycaps are typically surface-printed, they can also be double-shot molded (www.wikiwand.com/en/Injection_molding#Multi-shot_moulding), laser-printed, sublimation printed, or engraved.

The keycaps are injection molded parts. Injection molding is a manufacturing process for producing parts by injecting molten material into a mold. Injection molding can be performed with a host of materials including metals, glasses, elastomers, and most commonly thermoplastics and thermosetting polymers (e.g., thermoplastic resins).

Since keys may be pressed over a million times over the life of a keyboard, keycaps need to be made out of a wear-resistant material such as polybutylene terephthalate (PBT).

PBT has many attractive properties, such as high mechanical strength and toughness, high abrasion resistance, excellent dimensional stability, a high heat distortion temperature (up to 215°C for glass fiber-reinforced PBT), fast crystallization rates, high continuous use at elevated temperature (e.g., 140°C) due to low mechanical creep, good chemical resistance, and short processing cycle times in injection molding. Due to these properties, PBT can be found in many applications, such as electrical connectors for automobiles ("automotive connectors") and keyboard keycaps. As such, the global demand for PBT continues to increase. PBT can be synthesized via a melt polycondensation method in a two-stage process. First, bis(4-hydroxybutyl) terephthalate (BHBT) is formed via transesterification of dimethyl terephthalate (DMT) with 1,4-butanediol (BD). Then PBT is formed from BHBT in the polycondensation stage with the elimination of BD. Other synthesis routes include polymerization following a ring opening or enzymatic approach.

Concerns about climate change due to global warming from Greenhouse Gas (GHG) emissions are increasing both legislative and social pressure on manufacturers and consumers to reduce carbon emissions. As a result, both manufacturers and consumers are motivated to reduce the usage of products derived from petrochemical materials. Further, manufacturers will need to reduce usage and eventually replace materials derived from fossil fuels generating new carbon emissions with materials derived from biomass (i.e., renewable carbon) in the not-too-distant future.

DMT used for the synthesis of PBT is derived from petrochemical feedstock and therefore use of PBT results in a positive carbon footprint and thus should be replaced by a bio-based polyester with similar chemical and physical properties.

US 4,900,610A discloses a thermoplastic molding composition comprising a polyester blend of polybutylene terephthalate and a copolyester derived from condensing ethylene glycol, cyclohexanedimethanol and terephthalic acid wherein the ethylene glycol units of the copolyester comprise at least 25 mole% based on the total glycol content.

Jianhui Zhu et al., Macromolecules, Vol. 46, No. 3, pp. 796-804 (2013) describe poly(butylene 2,5 furan dicarboxylate) as a biobased alternative to PBT.

Niki Poulopoulou et al., Polymer, Vol. 212, 123157 (2021) describe poly(butylene 2,5-furandicarboxylate) and its blends with poly(butylene terephthalate).

WO 2020/254714 A is directed to bifuran copolyesters comprising 2,2'-bifuran-5,5'-dicarboxylic monomer residues.

US 6,322,875 B1 is directed to transparent decoration key tops and their manufacturing method.

There is a need for an injection moldable polymer substantially derived from biomass with substantially similar properties as fossil-fuel derived PBT, such that it can be a replacement material for PBT in keycap applications.

### BRIEF DESCRIPTION OF THE DRAWINGS

One or more embodiments of the present disclosure are illustrated by way of example and not limitation in the Figures of the accompanying drawings, in which like references indicate similar elements.
Figure 1 depicts a perspective view of a sample electronic device with keyboard.
Figure 2A depicts a side cross-section view of an example key, that may include a keycap having at least one retaining feature.
Figure 2B depicts a perspective exploded view of an example scissor mechanism with injection molded keycap mounted on top of the scissor mechanism.
Figure 2C is a perspective view showing the underside of the injection molded keycap with mounting brackets.
Figure 3 illustrates a molding machine for performing injection molding.
Figure 4 is a flowchart that illustrates a process for manufacturing keycaps.

### DETAILED DESCRIPTION

### ABBREVIATIONS

BF: Butylene 2,5-furandicarboxylate.
BBf: Butylene bifuranoate.
EF: Ethylene 2,5-furandicarboxylate.
BT: Butylene terephthalate.
PBT: Polybutylene terephthalate, also referred to as a polymer of butylene terephthalate.
PBF: Poly(butylene 2,5-furandicarboxylate), also referred as a polymer of butylene 2,5-furandicarboxylate.
PBBf: Poly(butylene bifuranoate), also referred to as a polymer of butylene bifuranoate.
PEF: Poly(ethylene 2,5-furandicarboxylate), also referred to as a polymer of ethylene 2,5-furandicarboxylate.

### CHEMICAL STRUCTURES

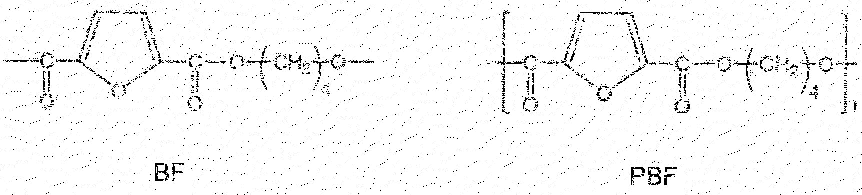

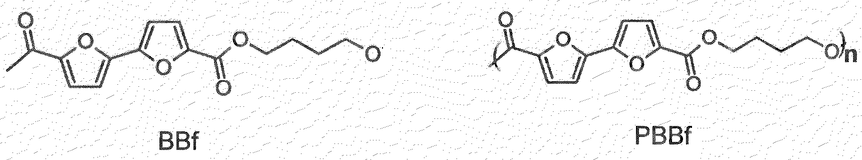

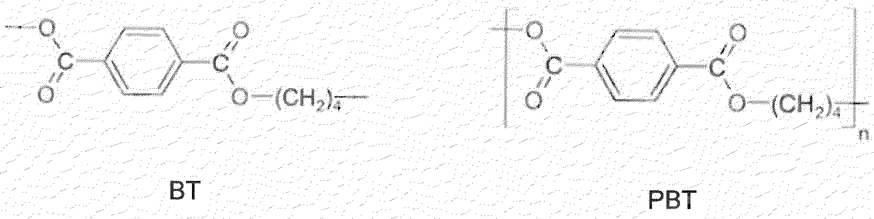

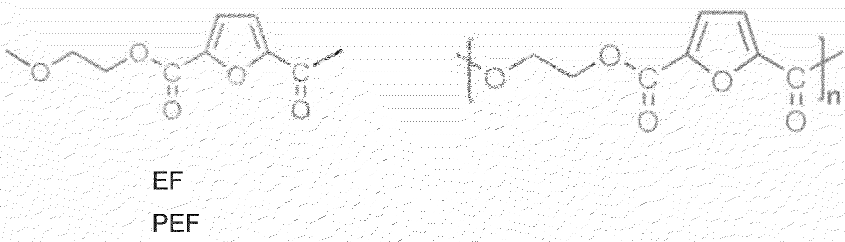

The present invention is set out in the appended set of claims.

Particularly, the present invention is directed to a keycap comprising one or more materials selected from the group consisting of:
a polymer of butylene 2,5-furandicarboxylate (PBF),
a polymer of butylene bifuranoate (PBBf),
a copolymer of (i) butylene 2,5-furandicarboxylate (BF) and (ii) butylene bifuranoate (BBf),
a copolymer of (i) ethylene 2,5-furandicarboxylate (EF) and (ii) one or both of BF and BBf, and
a copolymer of (i) butylene terephthalate (BT) and (ii) one or more of BF, BBf, and EF,
wherein the keycap is configured to mount on top of a switching mechanism of a key of a keyboard.

In addition, the present invention is directed to methods of injection molding a keycap.

The present disclosure describes improved keycaps by the substitution of polybutylene terephthalate (PBT)-based keycaps with poly(butylene 2,5-furandicarboxylate) (PBF)-based keycaps. PBF is an aromatic polyester that is chemically similar to PBT and exhibits similar chemical and physical properties and therefore is a potential substitute material for PBT. While PBT is derived from fossil fuel-based feedstock, PBF is derived from bio-based feedstock and has a lower carbon footprint than PBT.

PBF is similar to PBT as its chemical structure differs only by including a furan ring instead of a benzene ring. An underlying building block of PBF is 2,5 furan dicarboxylic acid (FDCA). FDCA is produced via catalytic conversion of 5-hydroxymethylfurfural (HMF), which can be produced by acid-catalyzed dehydration of fructose. PBF, like PBT, can be synthesized via melt polycondensation in a two-stage process. First, dimethyl 2,5-furan dicarboxylate (DMFD) is formed via esterification of FDCA with methanol. Second, bis(hydroxybutyl)-2,5-furan dicarboxylate (BHFD) is formed via transesterification of DMFD with 1,4-butanediol (BD). Then, PBF is formed from BHFD in the polycondensation stage with the elimination of BD. The process is described, for example, by M. Papageorgiou et al. in "Evaluation of polyesters from renewable resources as alternatives to the current fossil-based polymers. Phase transitions of poly(butylene 2,5-furan-dicarboxylate)," Polymer 55, 3846 (2014). An alternative synthesis method using ring opening polymerization is described, for example, by J.C. Morales-Huerta et al. in "Poly(alkylene 2,5-furandicarboxylate)s (PEF and PBF) by ring opening," Polymer 87, 148 (2016).

Due to their chemical similarity, PBF and PBT in general exhibit similar properties. PBF, however, exhibits superior gas diffusion barrier properties to oxygen and CO₂ compared to those of PBT. This is rooted in the lower symmetry of the furan ring in PBF compared to the benzene ring in PBT, resulting in very limited local motions in PBF, in particular the hindered furan ring flipping and restricted carbonyl rotations that will decrease the diffusion of small molecules.

Keycaps can be injection molded using a thermoplastic resin. Examples include polyamides such as nylon, polyacetals such as polyoxymethylene, polyolefins such as polypropylene, polyesters such as polyethylene terephthalate and PBT, polycarbonates, and polyphenylene sulfide. Among these, PBT is often used since PBT has desirable mechanical properties (e.g., tensile modulus and tensile strength), electrical properties, heat resistance, water resistance, and good dimensional stability required for keycaps. Moreover, PBT is a semi-crystalline resin and leads to high productivity by achieving a fast crystallization rate and solidification in a short time. Due to these advantages, PBT is frequently used as a molding material for keycaps. In conventional practice, strengthening additives (e.g., fibers) are added to the PBT to strengthen the PBT as the molding material for keycaps. Due to the chemical similarity of PBF to PBT, the same techniques of adding strengthening additives can be applied to PBF.

A drawback of PBF compared to PBT in relation to the use for keycaps is its lower melting temperature of 168°C to 186°C compared to the melting temperature of 221°C to 225°C for PBT. The present disclosure also describes a blend of PBF and PBT to overcome this drawback. As a result, savings in GHG emissions and Non-Renewable Energy Use (NREU) is realized but reduced in proportion to the reduced content of PBT.

To overcome the drawback of lower melting temperature 168°C to 186°C of PBF as it relates to use for keycaps, the present disclosure also describes a blend and copolymer of PBF and PEF. The melting temperature of PEF is in the range of 202-220°C. Like PBF, the underlying building block of PEF is FDCA. The resultant PEF is a biobased polymer; hence, significant savings in GHG emissions and NREU is realized by the combination of PBF and PEF.

PBF and PEF compared to PBT have slower crystallization rates which arise from the stiffness of the furan ring. The present disclosure also describes a usage of nucleating agents, additives, and fillers to increase the crystallization rate and nucleation density of PBF or PEF and associated blends, copolymers, and composites.

The present disclosure also describes using poly(butylene bifuranoate) (PBBf), also derived from FDCA and 2,2'-bifuran-5,5'-dicarboxylic acid (BFDCA), in keycaps. PBBf has a melting temperature of 215°C to 217°C. BFDCA, which is a precursor for PBBf, is derived from homogeneous Pd-catalyzed oxidative homocoupling of methyl 2-furoate (renewable feedstock) with molecular oxygen as an oxidant, as described in Mingchun Ye et al. "Oxidative coupling of 2-methyl furoate: A scalable synthesis of dimethyl 2,2'-bifuran-5,5'-dicarboxylate," Applied Catalysis A: General, 619, 118138 (2021).

Table 1 lists the relevant properties of PBT, PBF, PBBf, and PEF. The properties include tensile modulus, tensile strength, elongation at break, glass transition temperature (T_{g}), and melting temperature (Tₘ).

**Table 1: Comparison of properties of PBT, PBF and PBBf.**

| Polymer | Tensile Modulus (MPa) | Tensile Strength (MPa) | Elongation at Break (%) | T_{g} (°C) | Tₘ (°C) |
|---|---|---|---|---|---|
| PBT | 1500-3000 | 30-60 | 5-300 | 55-65 | 221-225 |
| PBF | 1000-4000 | 20-70 | 4-685 | 30-50 | 168-186 |
| PBBf | 1000-4000 | 40-90 | 5-100 | 55-70 | 215-217 |
| PEF | 1500-3500 | 25-95 | 1.5-8 | 75-80 | 202-220 |

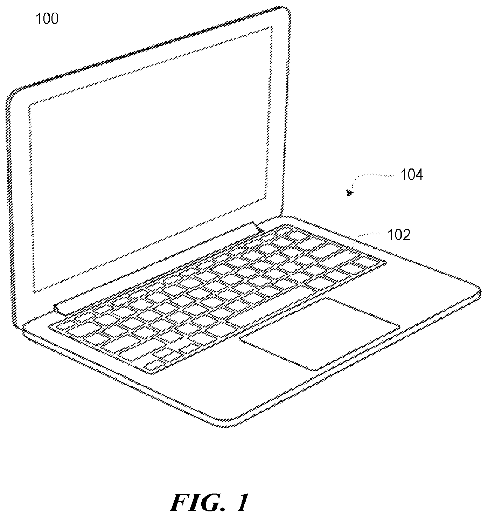

Figure 1 depicts a perspective view of a sample electronic device 100 including a plurality of keys 102. As depicted, the electronic device 100 is a portable laptop computer including an integrated keyboard 104 including a plurality of rows of keys 102 comprising at least a keycap mounted on top of a switching mechanism. The electronic device 100 may be a laptop computer as shown, although it may be appreciated that other electronic devices featuring a keyboard with keycaps are contemplated such as a desktop computer, a peripheral input device (e.g., peripheral keyboard), cell phone, wearable device, health device, and so on. The key may further be a discrete electronic part such as a switch or contactor for inclusion within a number of circuits or devices.

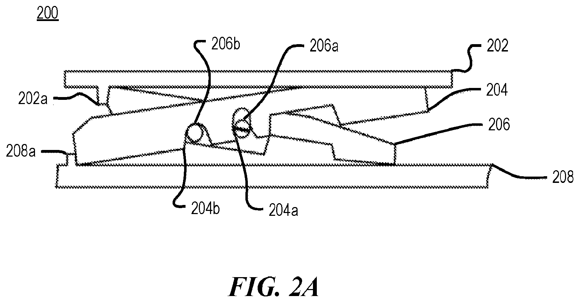

FIG. 2A depicts a side cross-section view of an example key 200. The key 200 may include a keycap 202 having at least one retaining feature 202a. The keycap 202 may be constructed of any suitable durable material such as PBT or alternative polymer material as disclosed in this invention.

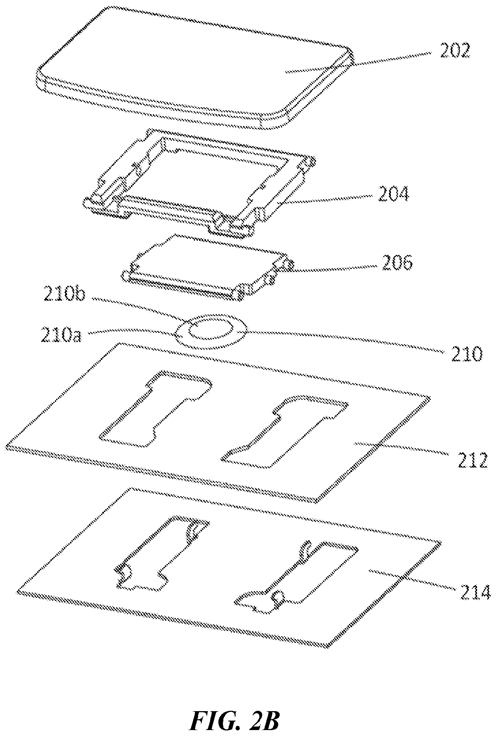

Figure 2B depicts an exploded perspective view of a keycap 202 on a scissor mechanism with scissor members 204 and 206, an elastic member 210 with frame 210a and elastic portion 210b which may be mounted on circuit board 212 situated above a support frame 214 with a plurality of mounting brackets. Scissor members 204 and 206 have a plurality of connecting portions attaching to the respective mounting brackets of the keycap 202 and the support frame 214.

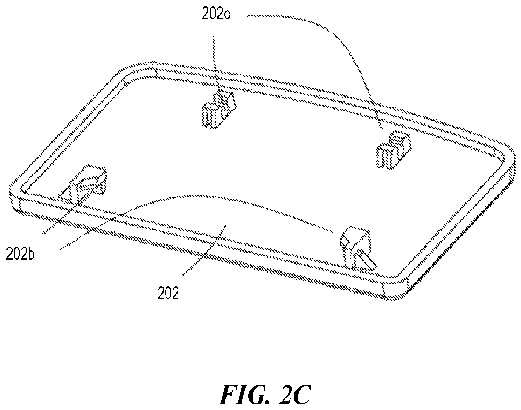

Referring to Figure 2C, the keycap 202 has an inner surface with a first pair of mounting brackets 202b that attach to connecting portions of scissor member 204, and a second pair of mounting brackets 202c that attach to connecting portions of scissor member 206.

The keycap 202 may be disposed above a scissor mechanism defined by the scissor members 204, 206. The scissor member 204 may be positioned to interface with a bottom surface of the keycap 202. For example, the scissor member 204 may include a partially angled top surface such that when the key 200 is in an "up" position, the angled portion is parallel to a bottom surface of the keycap 202. In this manner, the geometry selected for the scissor member 204 may aid in the structural support of the keycap 202. The scissor member 206 may interface with the retaining feature 202a. In this manner, when the keycap is depressed, the scissor member 206 may pivot at the retaining feature 202a to collapse the scissor mechanism of the key 200 downward.

The scissor mechanism may be disposed above a baseplate 208 which also may include at least one retaining feature 208a. The baseplate may be constructed of a number of suitable materials such as aluminum or steel.

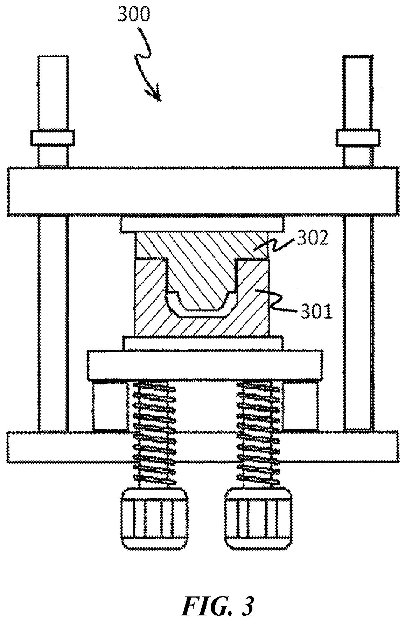

Figure 3 illustrates an exemplary molding machine 300 for performing an injection molding process. In the injection molding machine 300, one or more fixed molds 301 and movable molds 302, which are of the same number as that of the fixed molds 301, are arranged to face each other. Each set of the fixed molds 301 and the movable molds 302 is clamped to form a cavity in the shape of the injection molded part. Molten material is injected in the cavity between fixed molds 301 and movable molds 302 which are held in contact with the molten material for a prescribed amount of time until it cools down sufficiently to solidify. The movable molds 302 are then retracted from the opposing fixed molds 301 by moving them by a prescribed amount in the mold-opening direction by a servomotor control or hydraulic pressure control so that the injection molded part can be ejected. The molding machine 300 can be used for manufacturing keycaps, such as those described with respect to Figures 1, 2A, 2B, and 2C from thermoplastics including PBF, PBBf, polymer blends (also referred to as 'blends') or copolymers of BF, BBf, EF, or BT in any combination, any combinations thereof, or any combinations thereof in a blend with PBT, or any combinations thereof in a blend with PEF.

### Keycaps

In accordance with some embodiments of the present disclosure, a keycap is mounted on top of a switching mechanism of a key that is part of an integrated or peripheral keyboard or a discrete electronic switch. Exemplary keycaps include keycap 202 on top of a scissor switch mechanism described with respect to Figure 2 commonly used for laptops keyboards 102 described with respect to Figure 1.

In one preferred embodiment, the keycap can include PBF, PBBf, a copolymer of (i) BF and (ii) BBf, a copolymer of (i) EF and (ii) one or both of BF and BBf, a copolymer of (i) BT and (ii) one or more of BF, BBf, and EF, or any combination thereof. The polymers and/or copolymers can be alone or in any combination as a polymer blend (a mixture). For example, the keycap can include a copolymer of EF and BF, a copolymer of EF and BBf, a copolymer of EF, BF, and BBf, a copolymer of BT and BF, a copolymer of BT and BBf, a copolymer of BT and EF, a copolymer of BT, BF, and BBf, a copolymer of BT, BF, and EF, a copolymer of BT, BBf, and EF, a copolymer of BT, BF, BBf, and EF, or any combination thereof. In another example, the keycap includes a polymer blend of PBF and PBBf, a polymer blend of PEF and PBF, a polymer blend of PEF and PBBf, a polymer blend of PEF, PBF, and PBBf, a polymer blend of PBT and PBF, a polymer blend of PBT and PBBf, a polymer blend of PBT and PEF, a polymer blend of PBT, PBF, and PBBf, a polymer blend of PBT, PBF, and PEF, a polymer blend of PBT, PBBf, and PEF, a polymer blend of PBT, PBF, PBBf, and PEF, or any combination thereof.

The keycap can include any of the following polymers or copolymers, alone or in any combination as a polymer blend: PBF, PBBf, a blend (a mixture) or copolymer of BF and BBf, a blend or copolymer of EF and one or both of BF and BBf, or a blend or a copolymer of BT and one or more of BF, BBf, and EF.

A copolymer of BT and BF, BT and BBf, or BT, BF, and BBf can include 1-99 wt%, or 1-20 wt% (e.g., 1-10 wt%, or 10-20 wt%), or 20-40 wt % (e.g., 20-30 wt%, or 30-40 wt%), or 40-60 wt % (e.g., 40-50 wt% or 50-60 wt%), or 60-80 wt% (e.g., 60-70 wt% or 70-80 wt%), or 80-99 wt% (80-90 wt%, or 90-99 wt%) of BT.

In some embodiments, the keycap further includes PBT. The keycap can include, for example, a polymer blend comprising PBT in any combination with PBF, PBBf, a copolymer of BF and BBf, a copolymer of BT and BF, a copolymer of BT and BBf, or a copolymer of BT, BF, and BBf.

In some embodiments, the keycap includes a blend of PBT and PBF. The blend of PBT and PBF can include 1-99 wt%, or 1-20 wt% (e.g., 1-10 wt%, or 10-20 wt%), or 20-40 wt % (e.g., 20-30 wt%, or 30-40 wt%), or 40-60 wt % (e.g., 40-50 wt% or 50-60 wt%), or 60-80 wt% (e.g., 60-70 wt% or 70-80 wt%), or 80-99 wt% (80-90 wt%, or 90-99 wt%) of PBT.

In some embodiments, the keycap includes a blend of PBT and PBBf. The blend of PBT and PBBf can include 1-99 wt%, or 1-20 wt% (e.g., 1-10 wt%, or 10-20 wt%), or 20-40 wt % (e.g., 20-30 wt%, or 30-40 wt%), or 40-60 wt % (e.g., 40-50 wt% or 50-60 wt%), or 60-80 wt% (e.g., 60-70 wt% or 70-80 wt%), or 80-99 wt% (80-90 wt%, or 90-99 wt%) of PBT.

In some embodiments, the keycap includes a blend of PBT and a copolymer of BF and BBf. The blend of PBT and a copolymer of BF and BBf can include 1-99 wt%, or 1-20 wt% (e.g., 1-10 wt%, or 10-20 wt%), or 20-40 wt % (e.g., 20-30 wt%, or 30-40 wt%), or 40-60 wt % (e.g., 40-50 wt% or 50-60 wt%), or 60-80 wt% (e.g., 60-70 wt% or 70-80 wt%), or 80-99 wt% (80-90 wt%, or 90-99 wt%) of PBT.

In some embodiments, the keycap includes a copolymer of BF and BBf. The copolymer of BF and BBf can include 1-99 wt%, or 1-20 wt% (e.g., 1-10 wt%, or 10-20 wt%), or 20-40 wt % (e.g., 20-30 wt%, or 30-40 wt%), or 40-60 wt % (e.g., 40-50 wt% or 50-60 wt%), or 60-80 wt% (e.g., 60-70 wt% or 70-80 wt%), or 80-99 wt% (80-90 wt%, or 90-99 wt%) of BBf.

In some embodiments, the keycap includes a blend of PBF and PBBf. The blend of PBF and PBBf can include 1-99 wt%, or 1-20 wt% (e.g., 1-10 wt%, or 10-20 wt%), or 20-40 wt % (e.g., 20-30 wt%, or 30-40 wt%), or 40-60 wt % (e.g., 40-50 wt% or 50-60 wt%), or 60-80 wt% (e.g., 60-70 wt% or 70-80 wt%), or 80-99 wt% (80-90 wt%, or 90-99 wt%) of PBF.

In some embodiments, the keycap includes a copolymer of BF and EF. The copolymer of BF and EF can include 1-99 wt%, or 1-20 wt% (e.g., 1-10 wt%, or 10-20 wt%), or 20-40 wt % (e.g., 20-30 wt%, or 30-40 wt%), or 40-60 wt % (e.g., 40-50 wt% or 50-60 wt%), or 60-80 wt% (e.g., 60-70 wt% or 70-80 wt%), or 80-99 wt% (80-90 wt%, or 90-99 wt%) of BF.

In some embodiments, the keycap includes a blend of PBF and PEF. The blend of PBF and PEF can include 1-99 wt%, or 1-20 wt% (e.g., 1-10 wt%, or 10-20 wt%), or 20-40 wt % (e.g., 20-30 wt%, or 30-40 wt%), or 40-60 wt % (e.g., 40-50 wt% or 50-60 wt%), or 60-80 wt% (e.g., 60-70 wt% or 70-80 wt%), or 80-99 wt% (80-90 wt%, or 90-99 wt%) of PBF.

The weight percent of each constituent in a blend or in a copolymer is selected based on the desired properties to be achieved in the material. For example, in a blend of PBT (Tₘ = 221-225°C) and PBF (Tₘ = 168-186°C), the weight percentages of PBT and PBF can be selected to obtain a desired melting temperature of the blend, between those of the pure polymers.

In some embodiments, the keycap further includes an additive. The additive can be selected from, but is not limited to, an antioxidant, an ultraviolet (UV) stabilizer, a flame retardant, an anti-hydrolysis agent, a color pigment, a nucleating agent, an additive or filler to increase crystallization rate and/or mechanical strength, an additive for laser inscription, a lubricant, and a wax. For example, the keycap includes 0.1-3 wt%, 0.1-5 wt%, or 0.1-10 wt% of an antioxidant, such as sterically hindered phenols thioethers, phosphites, or any combination thereof; for example, the keycap includes 0.1-10 wt% of a UV stabilizer such as benzotriazole, hydroxybenzophenone, or any combination thereof; for example, the keycap includes 1-40 wt%, 2-30 wt%, or 5-25 wt% of flame retardant such as phosphoric ether, a magnesium-hydroxide, aluminum diethyl phosphinate or any combination thereof; and/or for example, the keycap includes 0.1-10 wt% of an anti-hydrolysis agent such as an acid scavenger; and/or for example, the keycap includes 0.1-20 wt% of color pigment such as anthraquinone, iron oxide, carbon black, titanium dioxide, orange pigment. The lubricants can include for example, polytetrafluoroethylene (PTFE), esters, and/or metals salts of fatty acids such as zinc stearate, calcium stearate, and adipic acid glycol polyester (AAGP). The nucleating agents or crystallization rate enhancers can include for example, sodium benzoate, sodium salt of saccharin, boron nitride, organic acids, metal salts, inorganics such as carbon nanotubes (CNT), talc, glass fibers, or metal carbonates, and/or coupling agents. The waxes can include for example, ethylene bis stearamide.

In some embodiments, the additive is a color changing additive for laser inscription. This additive has no inherent color or substantially no inherent color (only a slight inherent color) in the visible spectral range (light wavelength about 380 to 750 nm) and produces a marking with high color contrast in the visible range under the effect of laser light of which the wavelength is outside the visible range (below 380 nm or above 750 nm). The color contrast may be produced for example by the additive changing into a colored product under the effect of laser light from a Nd-YAG laser (wavelength 1064 nm) or excimer laser (wavelength 308 nm to 351 nm). Any additive with the characteristics noted above may be used for laser inscription, such as copper phosphate, copper sulfate, cupric hydroxide phosphate and copper thiocyanate, for example 0.02% to 5% of Cu₃(PO₄)₂·Cu(OH)₂.

In some embodiments, the additive is a strengthening additive. For example, the keycap includes 1-60 wt%, 2-50 wt%, or 5-40 wt% of a strengthening additive. The strengthening additive can be selected from, but is not limited to, glass fiber, carbon fiber, talc, cellulose, bamboo, softwood , hardwood, flax, kenaf, jute, ramie, coir, kapok, sisal, henequen, abaca, hemp, bagasse, wheat straw, rice hulls, rattan, sunn, and any combination thereof.

In some embodiments, the keycap has a tensile modulus in the range of about 1-4 GPa, 2-4 GPa, 3-7 GPa, or 5-7 GPa, and a tensile strength in the range of about 20-70 MPa, 40-70 MPa, 20-90 MPa, 40-90 MPa, 50-150 MPa, 90-150 MPa, 20-95 MPa, or 40-95 MPa.

Exemplary ranges for tensile modulus and tensile strengths are provided in Examples I through X. Compounding PBF and/or PBBf, or a copolymer of BF and BBf, with strengthening additives increases the tensile modulus and the tensile strength of the keycap. For example, the tensile modulus of PBF is in the range of 1-4 GPa, preferably in the range of 2-4 GPa, and the maximum tensile strength of PBF is in the range of 20-70 MPa, preferably in the range of 40-70 MPa; the tensile modulus of composites of PBF and a strengthening additive is in the range of 3-7 GPa, preferably in the range of 5-7 GPa, and the maximum tensile strength of composites of PBF and a strengthening additive is in the range of 50-150 MPa, preferably in the range of 90-150 MPa; the tensile modulus of the PBF/PBT blend is in the range of 1-4 GPa, preferably in the range of 2-4 GPa, and the maximum tensile strength of the PBF/PBT blend is in the range of 20-70 MPa, preferably in the range of 40-70 MPa; the tensile modulus of PBBf is in the range of 1-4 GPa, preferably in the range of 2-4 GPa, and the maximum tensile strength of PBBf is in the range of 40-90 MPa, preferably in the range of 55-90 MPa; the tensile modulus of composites of PBBf and a strengthening additive is in the range of 3-7 GPa, preferably in the range of 5-7 GPa, and the maximum tensile strength of composites of PBBf and a strengthening additive is in the range of 50-150 MPa, preferably in the range of 90-150 MPa; the tensile modulus of a PBF/PBBf blend or a copolymer of BF and BBf is in the range of 1-4 GPa, preferably in the range of 2-4 GPa, and the maximum tensile strength of the PBF/PBBf blend or copolymer of BF and BBf is in the range of 20-90 MPa, preferably in the range of 40-90 MPa, the tensile modulus of a PBF/PBBf blend or a copolymer of BF and BBf with strengthening additives is in the range of 3-7 GPa, preferably in the range of 5-7 GPa, and the maximum tensile strength of the PBF/PBBf blend or copolymer of BF and BBf with strengthening additive is in the range of 50-150 MPa, preferably in the range of 90-150 MPa.

The tensile modulus of a PBF/PEF blend or a copolymer of BF and EF is in the range of 1-4 GPa, preferably in the range of 2-4 GPa, and the maximum tensile strength of the PBF/PEF blend or copolymer of BF and EF is in the range of 20-95 MPa, preferably in the range of 40-95 MPa, the tensile modulus of a PBF/PEF blend or a copolymer of BF and EF with strengthening additives is in the range of 3-7 GPa, preferably in the range of 5-7 GPa, and the maximum tensile strength of the PBF/PBBf blend or copolymer of BF and BBf with strengthening additive is in the range of 50-150 MPa, preferably in the range of 90-150 MPa; the tensile modulus of a PBBf/PEF blend or a copolymer of BBf and EF is in the range of 1-4 GPa, preferably in the range of 2-4 GPa, and the maximum tensile strength of the PBBf/PEF blend or copolymer of BBf and EF is in the range of 20-95 MPa, preferably in the range of 40-95 MPa, the tensile modulus of a PBBf/PEF blend or a copolymer of BBf and EF with strengthening additives is in the range of 3-7 GPa, preferably in the range of 5-7 GPa, and the maximum tensile strength of the PBBf/PEF blend or copolymer of BBf and EF with strengthening additive is in the range of 50-150 MPa, preferably in the range of 90-150 MPa.

In some embodiments, the keycap has a heat deflection temperature ranging from 60°C to 150°C, from 80°C to 150°C, or from 100°C to 150°C.

PBF can be synthesized as described in Papageorgiou et al., "Evaluation of polyesters from renewable resources as alternatives to the current fossil-based polymers. Phase transitions of poly(butylene 2,5-furan-dicarboxylate)", Polymer 55, 3846 (2014) or J.C. Morales-Huerta et al. "Poly(alkylene 2,5-furandicarboxylate)s (PEF and PBF) by ring opening", Polymer 87, 148 (2016). BFDCA, a precursor for PBBf, can be synthesized as described in Mingchun Ye et al. "Oxidative coupling of 2-methyl furoate: A scalable synthesis of dimethyl 2,2'-bifuran-5,5'-dicarboxylate", Applied Catalysis A: General, 619, 118138 (2021), and PBBf can be synthesized from the precursor BFDCA as described in T. Kainulainen et al., "Utilizing Furfural-Based Bifuran Diester as Monomer and Comonomer for High-Performance Bioplastics: Properties of Poly(butylene furanoate), Poly(butylene bifuranoate), and Their Copolyesters", Biomacromolecules 21, 743 (2020). A synthesis of a random copolymer of BF and BBf is also described in Kainulainen et al., Biomacromolecules 21, 743-752 (2020). A blend of PBF and PEF is described in Poulopoulou et al., "Green polymeric materials: On the dynamic homogeneity and miscibility of furan-based polyester blends" Polymer 174, 187-199 (2019).

### Processes for Manufacturing Keycaps

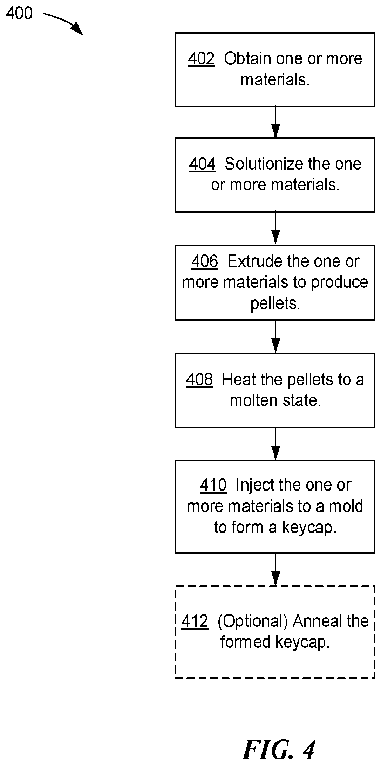

Figure 4 is a flowchart that illustrates a process 400 for manufacturing keycaps. In some embodiments, the keycaps correspond to the exemplary keycaps described with respect to Figure 1 and Figure 2(A - C).

At 402, the process 400 includes obtaining one or more materials. In some embodiments, the one or more materials are selected from the group consisting of PBF, PBBf, a copolymer of (i) BF and (ii) BBf, a copolymer of (i) EF and (ii) one or both of BF and BBf, a copolymer of (i) BT and (ii) one or more of BF, BBf, and EF, or any combination thereof. The polymers and/or copolymers can be alone or in any combination as a polymer blend (a mixture). For example, the one or more materials can include a copolymer of EF and BF, a copolymer of EF and BBf, a copolymer of EF, BF, and BBf, a copolymer of BT and BF, a copolymer of BT and BBf, a copolymer of BT and EF, a copolymer of BT, BF, and BBf, a copolymer of BT, BF, and EF, a copolymer of BT, BBf, and EF, a copolymer of BT, BF, BBf, and EF, or any combination thereof. For example, the one or more materials include a polymer blend of PBF and PBBf, a polymer blend of PEF and PBF, a polymer blend of PEF and PBBf, a polymer blend of PEF, PBF, and PBBf, a polymer blend of PBT and PBF, a polymer blend of PBT and PBBf, a polymer blend of PBT and PEF, a polymer blend of PBT, PBF, and PBBf, a polymer blend of PBT, PBF, and PEF, a polymer blend of PBT, PBBf, and PEF, a polymer blend of PBT, PBF, PBBf, and PEF, or any combination thereof.

In some embodiments, the process 400 includes obtaining a composition of materials. For example, the one or more materials include, or are in a form of, a composition including a polymer, including PBF, PBBf, or a copolymer (e.g., co-polyester) of BF and BBf, as well as other materials (e.g., additives, polymers such as PBT or PEF). The one or more materials and or composition of materials may include any of the materials described with respect to materials included in the keycaps of the present disclosure.

In some embodiments, the composition further includes PEF. In such embodiments, the process 400 further includes mixing PEF with the polymer, blend, or copolymer of the one or more materials to form a blend of PEF and the polymer, blend, or copolymer of the one or more materials to form a blend of PEF. The mixing can be done prior to extruding the solutionized composition to produce the compounded pellets.

In some embodiments, obtaining the one or more materials or the composition may include heating the one or more materials or the composition for a period of time (e.g., at a temperature ranging from 80°C to 120°C for 4 to 8 hours). The heating dries the one or more materials or the composition. For example, the moisture level of PBF, PBBf, PEF or PBT can be below 0.2 % and preferably below 0.03%.

In some embodiments, the one or more materials or the composition need to be compounded to form pellets suitable for injection molding, as described below with respect to Example VIII. The compounding can include solutionizing the one or more materials, mixing the materials together, and extruding the one or more materials to produce pellets.

At 404, the process 400 includes solutionizing the one or more materials or the composition. The solutionizing includes melt-mixing the one or more materials or the composition. For example, PBT has a melting point of 221-225°C, PBF has a melting point of 168-186°C, PEF has a melting point of 202-220°C and PBBf has a melting point of 215-217°C. As described in Example X below, the materials are mixed in a molten state. In one embodiment, compounding PBF and/or PBBf with any of the additives described above includes mixing PBF pellets and/or PBBf pellets with the additives in a molten state. In another embodiment, compounding PBF and PBT includes mixing PBF pellets and PBT pellets in a molten state. In another embodiment, compounding PBF and PBT with any of the additives described above includes mixing PBF and PBT pellets with additives in a molten state. In another embodiment, compounding BF and BBf copolymer with any of the additives described above includes mixing BF and BBf copolymer pellets with the additives in a molten state. In another embodiment, compounding PBF and PEF with any of the additives described above includes mixing PBF and PEF pellets with additives in a molten state. In another embodiment, compounding BF and EF copolymer with any of the additives described above includes mixing BF and EF copolymer pellets with the additives in a molten state. In another embodiment, compounding PBBf and PEF with any of the additives described above includes mixing PBBf and PEF pellets with additives in a molten state. In another embodiment, compounding BBf and EF copolymer with any of the additives described above includes mixing BBf and EF copolymer pellets with the additives in a molten state.

At 406, the process 400 includes extruding the solutionized one or more materials or the solutionized composition to produce compounded pellets. Extruding refers to a material forming process in which materials are forced to flow (e.g., by pressure) through a die of an extrusion machine (or extruder) to convert the material to a desired shape, such as pellets. Extruding may be used for mixing two or more materials by adding the two or more materials to an extrusion machine and forcing them to flow along the extruder machine. Different materials can be fed into the extrusion machine separately or as a mixture to form compounded pellets. The extrusion machine may be a single screw extruder or a twin-screw extruder where the twin-screw extruder provides a better control over the extrusion process. In some embodiments, the compounded pellets formed at 406 are subsequently heated to dry the pellets.

In some embodiments, the one or more materials include PBF and PBT. In such embodiments, the process 400 further includes blending PBF with PBT prior to extruding the solutionized composition to produce the compounded pellets. The blend of PBT and PBF can include 1-99 wt%, or 1-20 wt% (e.g., 1-10 wt%, or 10-20 wt%), or 20-40 wt % (e.g., 20-30 wt%, or 30-40 wt%), or 40-60 wt % (e.g., 40-50 wt% or 50-60 wt%), or 60-80 wt% (e.g., 60-70 wt% or 70-80 wt%), or 80-99 wt% (80-90 wt%, or 90-99 wt%) of PBT. The weight percentages of PBT and PBF can be selected to obtain desired properties in the blend, for example, a particular melting temperature between those of the pure polymers.

In some embodiments, the one or more materials include PBBf and PBT. In such embodiments, the process 400 further includes blending PBBf with PBT prior to extruding the solutionized composition to produce the compounded pellets. The blend of PBT and PBBf can include 1-99 wt%, or 1-20 wt% (e.g., 1-10 wt%, or 10-20 wt%), or 20-40 wt % (e.g., 20-30 wt%, or 30-40 wt%), or 40-60 wt % (e.g., 40-50 wt% or 50-60 wt%), or 60-80 wt% (e.g., 60-70 wt% or 70-80 wt%), or 80-99 wt% (80-90 wt%, or 90-99 wt%) of PBT. The weight percentages of PBBf and PBT can be selected to obtain desired properties in the blend, for example, a particular melting temperature between those of the pure polymers.

In some embodiments, the one or more materials include PBF and PBBf. In such embodiments, the process 400 further includes blending PBF with PBBf prior to extruding the solutionized composition to produce the compounded pellets. The blend of PBF and PBBf can include 1-99 wt%, or 1-20 wt% (e.g., 1-10 wt%, or 10-20 wt%), or 20-40 wt % (e.g., 20-30 wt%, or 30-40 wt%), or 40-60 wt % (e.g., 40-50 wt% or 50-60 wt%), or 60-80 wt% (e.g., 60-70 wt% or 70-80 wt%), or 80-99 wt% (80-90 wt%, or 90-99 wt%) of PBF. The weight percentages of PBF and PBBf can be selected to obtain desired properties in the blend, for example, a particular melting temperature between those of the pure polymers.

In some embodiments, the one or more materials include PBF and PEF. In such embodiments, the process 400 further includes blending PBF with PEF prior to extruding the solutionized composition to produce the compounded pellets. The blend of PBF and PEF can include 1-99 wt%, or 1-20 wt% (e.g., 1-10 wt%, or 10-20 wt%), or 20-40 wt % (e.g., 20-30 wt%, or 30-40 wt%), or 40-60 wt % (e.g., 40-50 wt% or 50-60 wt%), or 60-80 wt% (e.g., 60-70 wt% or 70-80 wt%), or 80-99 wt% (80-90 wt%, or 90-99 wt%) of PBF. The weight percentages of PBF and PEF can be selected to obtain desired properties in the blend, for example, a particular melting temperature between those of the pure polymers.

In some embodiments, the one or more materials include PBBf and PEF. In such embodiments, the process 400 further includes blending PBBf with PEF prior to extruding the solutionized composition to produce the compounded pellets. The blend of PBBf and PEF can include 1-99 wt%, or 1-20 wt% (e.g., 1-10 wt%, or 10-20 wt%), or 20-40 wt % (e.g., 20-30 wt%, or 30-40 wt%), or 40-60 wt % (e.g., 40-50 wt% or 50-60 wt%), or 60-80 wt% (e.g., 60-70 wt% or 70-80 wt%), or 80-99 wt% (80-90 wt%, or 90-99 wt%) of PBBf. The weight percentages of PBBf and PEF can be selected to obtain desired properties in the blend, for example, a particular melting temperature between those of the pure polymers.

In some embodiments, the one or more materials include a copolymer or copolymers of BF, BBf, EF, or BT in any combination, and a polymer or polymers PBF, PBBf, PEF, or PBT, in any combination. In such embodiments, the process 400 further includes blending the copolymer(s) with the polymer(s) prior to extruding the solutionized composition to produce the compounded pellets. The blend of copolymer(s) and polymer(s) can include 1-99 wt%, or 1-20 wt% (e.g., 1-10 wt%, or 10-20 wt%), or 20-40 wt % (e.g., 20-30 wt%, or 30-40 wt%), or 40-60 wt % (e.g., 40-50 wt% or 50-60 wt%), or 60-80 wt% (e.g., 60-70 wt% or 70-80 wt%), or 80-99 wt% (80-90 wt%, or 90-99 wt%) of PBF or BF. The weight percentages of the copolyesters of BF, BBf, EF, and/or BT and polyesters of PBF, PBBf, PEF, and/or PBT can be selected to obtain desired properties in the blend, for example, a particular melting temperature between those of the pure polymers.

In some embodiments, the composition includes any of the materials described above and one or more additives. The one or more additives can include a first additive selected from, but not limited to, an antioxidant, a UV stabilizer, a flame retardant, an anti-hydrolysis agent, a color pigment, a lubricant, a wax, a nucleating agent, an additive for laser inscription, and any combination thereof. Alternatively or additionally, the one or more additives can include a second additive. The second additive can include a strengthening additive selected from, but not limited to, a glass fiber, carbon fiber, talc, or any combination thereof. Alternatively or additionally, the second additive can include, but is not limited to, cellulose, bamboo, softwood , hardwood, flax, kenaf, jute, ramie, coir, kapok, sisal, henequen, abaca, hemp, bagasse, wheat straw, rice hulls, rattan, sunn, and any combination thereof.

Process 400 further includes injection molding the compounded pellets to form a keycap. Injection molding may be performed using an injection molding machine. An exemplary injection molding machine is shown in Figure 3. Injection molding includes heating the extruded pellets, including the one or more materials or the composition, to a molten state at 408 and injecting the one or more materials in the molten state into a mold to form the keycap at 410. The process 400 can also include annealing the formed keycap at or above 60°C, or at or above 100°C. For example, the annealing can be done at 60-135°C. In some embodiments, the annealing is done at 115°C. Annealing increases crystallinity of the keycap thereby improving its strength and durability properties.

### EXAMPLES

### Example I: Injection Molding Procedure and Properties for PBF

PBF has a melting temperature of about 168°C to 186°C. In the example, PBF resin is injection molded to form keycaps using an injection molding setup (e.g., the molding machine 300 in Figure 3). PBF resin is air or vacuum dried at 80°C to 120°C for 4 to 8 hours prior to injection molding. The moisture level of the environment during drying is below 0.2% or below 0.03%. The PBF pellets are heated to a melt (a melt referring to a material in a molten state) at about 180°C to 230°C or at about 190°C to 210°C barrel temperature of injection molding machine before injecting. The melt is introduced into the mold at an injection pressure of 50-180 MPa, or at an injection pressure of 70-120 MPa, into a mold held at a temperature between 40°C and 100°C, or at a temperature between 60°C and 80°C. The intrinsic viscosity (IV) is between 0.5 and 1.5 dL/g, and melt-flow index between 5 g/10 minutes and 70 g/10 minutes at a selected injection molding temperature and load range.

The tensile modulus of PBF is in the range of 1-4 GPa or in the range of 2-4 GPa, and maximum tensile strength is in the range of 20-70 MPa or in the range of 40-70 MPa. The properties of the PBF specimen are further improved by annealing the molded specimen at 60-135°C, preferably at 115°C. Annealing increases crystallinity of the keycap thereby improving its strength and durability.

PBF can be synthesized as described in Papageorgiou et al., "Evaluation of polyesters from renewable resources as alternatives to the current fossil-based polymers. Phase transitions of poly(butylene 2,5-furan-dicarboxylate)," Polymer 55, 3846 (2014) or J.C. Morales-Huerta et al. "Poly(alkylene 2,5-furandicarboxylate)s (PEF and PBF) by ring opening," Polymer 87, 148 (2016).

### Example II: Injection Molding Procedure for PBF Compounded with Additives

For practical uses, PBF resin may be compounded with a variety of additives (see, Example VIII for compounding). For example, one or more additives, including glass fiber, carbon fiber, talc, or a natural filler, may be added at 1-60 wt% for mechanical strengthening. A natural filler refers to a plant-based filler material derived from plants (grasses, shrubs, trees, etc.). A natural filler can include, but is not limited to, cellulose, bamboo, softwood , hardwood, flax, kenaf, jute, ramie, coir, kapok, sisal, henequen, abaca, hemp, bagasse, wheat straw, rice hulls, rattan, or sunn.

In the example, a flame retardant such as phosphoric acid ether, a magnesium-hydroxide, or aluminum diethyl phosphinate can be added at 1-40 wt%. Sterically hindered phenols or thioethers or phosphites or combination may be added as an antioxidant at 0.1-10 wt%. An acid scavenger may be added as an anti-hydrolysis agent at 0.1-10 wt%. Benzotriazole, hydroxybenzophenone may be added as a UV stabilizer at 0.1-10 wt%. Color pigments may be added as required at ≤ 20 wt%. A color changing additive for laser inscription may be added at 0.02% to 5%. Other additives may include lubricants such as polytetrafluoroethylene ethylene (PTFE), esters and metals salts of fatty acids such as zinc stearate, calcium stearate, and adipic acid glycol polyester (AAGP), nucleating agents such as sodium benzoate, sodium salt of saccharin, boron nitride, organic acids, metal salts, inorganics such as CNT, talc, glass fibers, or metal carbonates, and coupling agents and waxes such as ethylene bis stearamide.

The compounded PBF composite pellets are injection molded to form a keycap using an injection molding setup. (e.g., the molding machine 300 described with respect to Figure 3). PBF composite is air or vacuum dried at 80°C to 120°C for 4 to 8 hours prior to injection molding. The moisture level during drying is below 0.2%, or below 0.03%. The PBF pellets are heated to about 180°C to 230°C or between 190°C and 210°C before injecting melt into the mold at a pressure of 50-220 MPa, or at a pressure of 90-150 MPa, into a mold held at a temperature of between 40°C and 100°C, or between a temperature of 60°C and 80°C. The intrinsic viscosity (IV) is between 0.5 and 1.5 dL/g and melt-flow index between 5 g/10 minutes and 70 g/10 minutes at selected injection molding temperature and load range.

The tensile modulus of composites of PBF with strengthening additives is in the range of 3-7 GPa, or in the range of 5-7 GPa, and the maximum tensile strength is in the range of 50-150 MPa, or in the range of 90-150 MPa.

### Example III: Injection Molding Procedure for PBF/PBT Blends

As indicated earlier, PBF has a melting temperature of about 168°C to 186°C, while PBT has a melting point of about 221°C to 225°C. For applications in which it is necessary to have a higher melting temperature than that of pure PBF, it may therefore be desirable to use a blend of PBF and PBT. The synthesis of such blends is described by X. Zhang et al. in CN110229480A "A kind of preparation method of poly-furandicarboxylic acid butanediol ester and polybutylene terephthalate (PBT) blend."

The melting point of the blend changes according to the ratio of PBF to PBT. For example, a 50/50 PBF/PBT blend will have a melting temperature close to 195°C to 200°C.

In this example, a blend including PBF and PBT is injection molded to form a keycap using an injection molding setup as described above (e.g., the molding machine 300 in Figure 3). Compounded PBF and PBT pellets are air or vacuum dried at 80°C to 120°C for 4 to 8 hours prior to injection molding. In the example, the moisture level during drying is below 0.2%, or below 0.03%. The compounded PBF and PBT pellets are heated between 180°C and 240°C or between 190°C and 220°C before injection molding with a pressure of 50-150 MPa, or with a pressure of 70-120 MPa, into a mold held at a temperature between 40°C to 120°C, or at a temperature between 60°C and 80°C.

In the example, the tensile modulus of the PBF/PBT blend is in the range of 1-4 GPa, or in the range of 2-4 GPa, and maximum tensile strength is in the range of 20-70 MPa, or in the range of 40-70 MPa. The heat deflection temperature of the blend is expected to be between 60°C and 150°C, or between 100°C and 150°C.

### Example IV: Injection Molding Procedure and Properties of PBBf

As described earlier, PBBf has a melting temperature of about 215°C to 217°C. In this example, PBBf resin is injection molded to form keycaps using an injection molding setup (e.g., the injection molding machine 300 in Figure 3). PBBf resin is air or vacuum dried at 80°C to 120°C for 4 to 8 hours prior to injection molding. The moisture level after drying is below 0.2%, or below 0.03%. The PBBf pellets are heated to about 220°C to 280°C, or between 230°C and 260°C barrel temperature of injection molding machine before injecting melt into the mold at an injection pressure of 50-180 MPa, or at an injection pressure of 70-120 MPa, into a mold set at a temperature between 60°C and 120°C, or a temperature between 80°C and 110°C. The intrinsic viscosity (IV) is between 0.5 and 1.5 dL/g and melt-flow index between 5 g/10 minutes and 70 g/10 minutes at a selected injection molding temperature and load range.

The tensile modulus of PBBf is in the range of 1-4 GPa, or in the range of 2-4 GPa, and maximum tensile strength is in the range of 40-90 MPa, or in the range of 55-90 MPa.

BFDCA, a precursor for PBBf, can be synthesized as described in Mingchun Ye et al. "Oxidative coupling of 2-methyl furoate: A scalable synthesis of dimethyl 2,2'-bifuran-5,5'-dicarboxylate," Applied Catalysis A: General, 619, 118138 (2021) and PBBf can be synthesized from the precursor BFDCA as described in T. Kainulainen et al., "Utilizing Furfural-Based Bifuran Diester as Monomer and Comonomer for High-Performance Bioplastics: Properties of Poly(butylene furanoate), Poly(butylene bifuranoate), and Their Copolyesters" Biomacromolecules 21, 743 (2020).

### Example V: Injection Molding Procedure for PBBf Compounded with Additives

For practical uses, PBBf resin can be compounded with a variety of additives including, but not limited to, glass fiber, carbon fiber, talc, or natural fillers. Such additives may be added at 1-60 wt% for mechanical strengthening. A flame retardant such as phosphoric ether, a magnesium-hydroxide, or aluminum diethyl phosphinate may be added at 1-40 wt%. Sterically hindered phenols or thioethers or phosphites or any combination may be added as an antioxidant at 0.1-10 wt%. An acid scavenger can be added as an anti-hydrolysis agent at 0.1-10 wt%. Benzotriazole, hydroxybenzophenone can be added as a UV Stabilizer at 0.1-10 wt%. Color pigments can be added as required at ≤ 20 wt%. A color changing additive for laser inscription may be added at 0.02% to 5%. Other additives as required might be added: lubricants such as polytetrafluoroethylene ethylene (PTFE), esters and metals salts of fatty acids such as zinc stearate, calcium stearate, and AAGP, nucleating agents such as sodium benzoate, sodium salt of saccharin, boron nitride, organic acids, metal salts, inorganics such as CNT, talc, glass fibers, or metal carbonates, and coupling agents and waxes such as ethylene bis stearamide.

In this example, compounded PBBf composite pellets are injection molded to form keycaps using an injection molding setup (e.g., the molding machine 300 in Figure 3). PBBf composite is air or vacuum dried at 80°C to 120°C for 4 to 8 hours prior to injection molding. The moisture level after drying is below 0.2%, or below 0.03%. The PBBf composite pellets are heated to about a temperature of 220°C to 280°C, or at a temperature between 230°C to 260°C barrel temperature of injection molding machine before injecting melt into the mold at an injection pressure of 50-220 MPa, or at an injection pressure of 90-150 MPa, into a mold set at a temperature between 60°C and 120°C, or between 80°C and 110°C. The intrinsic viscosity (IV) is between 0.5 and 1.5 dL/g and melt-flow index between 5 g/10 and 70 g/10 minutes at selected injection molding temperature and load range.

The tensile modulus of PBBf-glass fiber composite is in the range of 3-7 GPa, or in the range 5-7 GPa, and maximum tensile strength is in the range of 50-150 MPa, or in the range of 90-150 MPa.

### Example VI: Injection Molding Procedure for PBF-PBBf Blend and Copolymer of BF and BBf

As indicated earlier, PBF has a melting temperature of about 168°C to 186°C, and PBBf has a melting point of 215°C to 217°C. For some applications, it is therefore desirable to blend PBF and PBBf or synthesize random copolymers (e.g., copolyesters) of butylene furanoate (BF) and butylene bifuranoate (BBf), derived from FDCA and BFDCA, respectively. A synthesis of a random copolymer of BF and BBf is described in Kainulainen et al. "Utilizing Furfural-Based Bifuran Diester as Monomer and Comonomer for High-Performance Bioplastics: Properties of Poly(butylene furanoate), Poly(butylene bifuranoate), and Their Copolymers," Biomacromolecules 21, 743-752 (2020).

Depending on the wt% of BF in the blend or in the copolymer, the melt temperature can range between 168°C and 217°C. In this example, a blend of PBF and PBBf or copolymer of BF and BBf is injection molded to form keycaps using an injection molding setup (e.g., the molding machine 300 in Figure 3). Compounded pellets including a blend of PBF and PBBf or copolymer of BF and BBf are air or vacuum dried at 80°C to 120°C for 4 to 8 hours prior to injection molding. The moisture level during drying is below 0.2%, or below 0.03%. The blend or copolymer is heated between 180°C and 280°C before injection molding with a pressure of 50-180 MPa, or with a pressure of 70-120 MPa, into a mold held at a temperature between 40°C and 120°C, or between 60°C and 80°C. The tensile modulus of PBF/PBBf blend or copolymer of BF and BBf is in the range of 1-4 GPa, or in the range of 2-4 GPa, and maximum tensile strength is in the range of 20-90 MPa, or in the range of 40-90 MPa.

### Example VII: Injection Molding Procedure for Blend PBF and PBBf or Copolymer of BF and BBf With Additives

A blend of PBF and PBBf or a copolymer of BF and BBf can be compounded with a variety of additives. The additives may include, but are not limited to, glass fiber, carbon fiber, talc, or natural fillers. Such additives may be added at 1-60 wt% for mechanical strengthening. A flame retardant such as phosphoric ether, magnesium-hydroxide, or aluminum diethyl phosphinate can be added as a flame retardant at 1-40 wt%. Sterically hindered phenols or thioethers or phosphites or combination may be added as an antioxidant at 0.1-10 wt%. An acid scavenger can be added as an anti-hydrolysis agent at 0.1-10 wt%. Benzotriazole, hydroxybenzophenone can be added as a UV stabilizer at 0.1-10 wt%. Color pigments may be added as required at ≤ 20 wt%. A color changing additive for laser inscription may be added at 0.02% to 5%. Other additives as required might be added: lubricants such as polytetrafluoroethylene ethylene (PTFE), esters and metals salts of fatty acids such as zinc stearate, calcium stearate, and AAGP, nucleating agents such as sodium benzoate, sodium salt of saccharin, boron nitride, organic acids, metal salts, inorganics such as CNT, talc, glass fibers, or metal carbonates, and coupling agents and waxes such as ethylene bis stearamide.

A compounded blend of PBF and PBBf or synthesized copolymer of BF and BBf is injection molded to form keycaps using an injection molding setup (e.g., the molding machine 300 in Figure 3). The blend or copolymer-based composites are air or vacuum dried at 80°C to 120°C for 4 to 8 hours prior to injection molding. In the example, the moisture level during drying is below 0.2%, or below 0.03%. The compounded blend or co-polyester pellets including additives are heated to about 180°C to 280°C before injecting melt into the mold at a pressure of 50-220 MPa, or at a pressure of 90-150 MPa, into a mold held at a temperature of 40°C to 120°C, or between 60°C and 110°C. The intrinsic viscosity (IV) is between 0.5 and 1.5 dL/g and melt-flow index between 5 g/10 minutes and 70 g/10 minutes at selected injection molding temperature and load range. The tensile modulus of composites of PBF with strengthening additives is in the range of 3-7 GPa, or in the range of 5-7 GPa, and maximum tensile strength is in the range of 50-150 MPa, or in the range of 90-150 MPa.

### Example VIII: Injection Molding Procedure for PBF-PEF Blend or Copolymer of BF and EF

As indicated earlier, PBF has a melting temperature of about 168°C to 186°C, and PEF has a melting temperature of 202°C to 220°C. For some applications, it is therefore desirable to blend PBF and PEF or synthesize random copolymers (e.g., copolyesters) of butylene furanoate (BF) and ethylene furanoate (EF). Depending on the wt% of BF in the blend or in the copolymer, the melt temperature can range between 168°C and 220°C. In this example, a blend of PBF and PEF or copolymer of BF and EF is injection molded to form keycaps (e.g., such as those described with respect to Figures 1-2C using an injection molding setup (e.g., the molding machine 300 in Figure 3). Compounded pellets including a blend of PBF and PEF or copolymer of BF and EF are air or vacuum dried at 80°C to 120°C for 4 to 8 hours prior to injection molding. The moisture level during drying is below 0.2%, or below 0.03%. The blend or copolymer is heated between 180°C and 280°C before injection molding with a pressure of 50-180 MPa, or with a pressure of 70-120 MPa, into a mold held at a temperature between 40°C and 120°C, or between 60°C and 80°C. The tensile modulus of PBF/PEF blend or copolymer of BF and BBf is in the range of 1-4 GPa, or in the range of 2-4 GPa, and maximum tensile strength is in the range of 20-95 MPa, or in the range of 40-95 MPa.

### Example IX: Injection Molding Procedure for a Blend of PBF and PEF or a Copolymer of BF and EF With Additives

A blend of PBF and PEF or a copolymer of BF and EF can be compounded with a variety of additives. The additives may include, but are not limited to, glass fiber, carbon fiber, talc, or natural fillers. Such additives may be added at 1-60 wt% for mechanical strengthening. A flame retardant such as phosphoric ether, magnesium-hydroxide, or aluminum diethyl phosphinate can be added as a flame retardant at 1-40 wt%. Sterically hindered phenols or thioethers or phosphites or combination may be added as an antioxidant at 0.1-10 wt%. An acid scavenger can be added as an anti-hydrolysis agent at 0.1-10 wt%. Benzotriazole, hydroxybenzophenone can be added as a UV stabilizer at 0.1-10 wt%. Color pigments may be added as required at ≤ 20 wt%. A color changing additive for laser inscription may be added at 0.02% to 5%. Other additives as required might be added: lubricants such as polytetrafluoroethylene ethylene (PTFE), esters and metals salts of fatty acids such as zinc stearate, calcium stearate, and AAGP, nucleating agents such as sodium benzoate, sodium salt of saccharin, boron nitride, organic acids, metals salts inorganics such as CNT, talc or metal carbonates and coupling agents and waxes such as ethylene bis stearamide.

A compounded blend of PBF and PEF or synthesized copolymer of BF and EF is injection molded to form keycaps (e.g., such as those described with respect to Figures 1-2C) using an injection molding setup (e.g., the molding machine 300 in Figure 3). The blend or copolymer-based composites are air or vacuum dried at 80°C to 120°C for 4 to 8 hours prior to injection molding. In the example, the moisture level during drying is below 0.2%, or below 0.03%. The compounded blend or co-polyester pellets including additives are heated to about 180°C to 280°C before injecting melt into the mold at a pressure of 50-220 MPa, or at a pressure of 90-150 MPa, into a mold held at a temperature of 40°C to 120°C, or between 60°C and 110°C. The intrinsic viscosity (IV) is between 0.5 and 1.5 dL/g and melt-flow index between 5 g/10 minutes and 70 g/10 minutes at selected injection molding temperature and load range. The tensile modulus of composites of PBF with strengthening additives is in the range of 3-7 GPa, or in the range of 5-7 GPa, and maximum tensile strength is in the range of 50-150 MPa, or in the range of 90-150 MPa.

### Example X: Compounding of PBF

### Compounding of PBF with Additives

As indicated earlier, PBF has a melting temperature of about 168°C to 186°C. To improve the durability and processing of the PBF for practical applications, PBF can be compounded with additives such as antioxidants, UV stabilizers, flame retardants, anti-hydrolysis agents, color pigments, lubricants, waxes, nucleating agents, color changing additives for laser inscription, etc., to obtain extruded pellets.

In the example, prior to extrusion, PBF is air or vacuum dried at 80°C to 120°C for 4 to 8 hours. Additives are dried as applicable. The moisture level during drying is below 0.2%, or below 0.03%. The PBF pellets and additives are melt-mixed between 180°C and 230°C, or between 190°C and 210°C. The components are fed together or separately along the extruder using a side feed of the extruder. The extrusion is carried out using a twin-screw or a single-screw extruder. Generally, a twin-screw extruder can be more shear intensive compared to a single-screw extruder. The extruded composition is optionally pelletized and dried to obtain dry pellets for injection molding. The moisture content in the dried pellets is below 0.2%, or below 0.03%.

### Compounding of PBF With Filler and/or Additives

For practical uses, PBF may be compounded with a variety of fillers and additives as discussed above (Example II). In this example, prior to extrusion, PBF is air or vacuum dried at 80°C to 120°C for 4 to 8 hours. The moisture level during drying is below 0.2%, or below 0.03%. The PBF pellets and fillers such as glass fiber, carbon fiber, talc, or natural fillers and/or other additives are melt-mixed between 180°C to 230°C, or between 190°C and 210°C. The components can be fed together or separately along the extruder. The strengthening additive is fed separately using the side feeder to avoid attrition of the strengthening additive. In a low shear single screw extruder, a filler or an additive is mixed together with the polymer and fed together through the main feeder of the extruder. In a high shear twin-screw extruder, a filler or an additive can be mixed together with the polymer or fed separately through the main side feeder of the extruder. The extrusion is carried out using a twin-screw or single-screw extruder. The extruded composition is optionally pelletized and dried to obtain dry pellets for injection molding. The moisture content in the dried pellets is below 0.2%, preferably < 0.03%.

### Compounding PBF and PBT Blend

In this example, prior to extrusion, PBF is air or vacuum dried at 80°C to 120°C for 4 to 8 hours. Prior to extrusion, PBT is air or vacuum dried between 80°C and 120°C, for 4 to 8 hours. The moisture level during drying in both PBF and PBT is 0.2%, or below 0.03%. The PBF and PBT pellets and additives are melt mixed in the extruder. PBF and PBT are fed together in the extruder and melt mixed under shear to obtain a PBT/PBF blend. The amount of PBT varies in the range of 1-99 wt%, or 1-20 wt% (e.g., 1-10 wt%, or 10-20 wt%), or 20-40 wt % (e.g., 20-30 wt%, or 30-40 wt%), or 40-60 wt % (e.g., 40-50 wt% or 50-60 wt%), or 60-80 wt% (e.g., 60-70 wt% or 70-80 wt%), or 80-99 wt% (80-90 wt%, or 90-99 wt%). The extruder temperature ranges from 180°C to 250°C, with the extruder temperature determined by the melting temperature of the PBF/PBT blend which depends on the PBF/PBT mixing ratio. The extrusion is carried out using a twin-screw or single-screw extruder. The extruder screw speed is between 30 and 200 rpm, or ≤ 100 rpm. The extruded composition is optionally pelletized and air or vacuum dried to obtain dry pellets for injection molding. The moisture content in the dried pellets is below 0.2%, or < 0.03%.

### Compounding of PBBf With Additives

As described earlier, PBBf has a melting temperature of about 215°C to 217°C. To improve the durability and processing of the PBBf for practical applications, PBBf can be compounded with additives such as antioxidants, UV stabilizers, flame retardants, anti-hydrolysis agents, color pigments, lubricants, waxes, nucleating agents, color changing additives for laser inscription, etc., to obtain extruded pellets.

In this example, prior to extrusion, PBBf is air or vacuum dried at 80°C to 120°C for 4 to 8 hours. Additives are optionally dried as applicable. The moisture level during drying is below 0.2%, or below 0.03%. The PBBf pellets and additives are melt mixed between 220°C and 280°C, or between 230°C and 260°C. The mixture is fed together along the extruder. Alternatively, the PBBf pellets and additives are fed separately along the extruder. The extrusion is carried out using a twin-screw or single-screw extruder. The extruder screw speed varies from 30 to 200 rpm, or ≤ 100 rpm. The extruded composition is optionally pelletized and air or vacuum dried to obtain dry pellets for injection molding. The moisture content in the dried pellets is below 0.2%, or < 0.03%.

### Compounding of PBBf With Filler and/or Additives

For practical uses, PBBf can be compounded with a variety of fillers and additives as discussed above in Example V. In this example, prior to extrusion, PBBf is air or vacuum dried at 80°C to 120°C for 4 to 8 hours. The moisture level during drying is below 0.2%, or below 0.03%. The PBBf pellets and fillers such as glass fiber, carbon fiber, talc, or natural fillers and/or other additives, are melt mixed between 220°C and 280°C or between 230°C and 260°C. The components are fed together or separately along the extruder. Preferably, fillers are fed partially separately using the side feeder. The extrusion is carried out using a twin-screw or single-screw extruder. The extruded composition is optionally pelletized and dried to obtain pellets for injection molding. The moisture content in the dried pellets is below 0.2%, preferably < 0.03%.

### Blend of PBF and PBBf

In this example, prior to extrusion, PBF and PBBf are air or vacuum dried at 80°C to 120°C for 4 to 8 hours. The moisture level during drying in both PBF and PBBf is below 0.2%, or below 0.03%. PBF, PBBf, and additives are fed together in the extruder and melt mixed under shear to obtain a PBF/PBBf blend. Fillers such as glass fiber, carbon fiber, talc, or natural fillers and/or additives are added together with the PBF and PBBf or separately along the extruder. The amount of PBF varies in the range of 1-99 wt%, or 1-20 wt% (e.g., 1-10 wt%, or 10-20 wt%), or 20-40 wt % (e.g., 20-30 wt%, or 30-40 wt%), or 40-60 wt % (e.g., 40-50 wt% or 50-60 wt%), or 60-80 wt% (e.g., 60-70 wt% or 70-80 wt%), or 80-99 wt% (80-90 wt%, or 90-99 wt%). The composition of filler varies from 1-60 wt%. The extruder temperature ranges from 180°C to 280°C with the preferred extruder temperature determined by and set at slightly above the melting temperature of the PBF/PBBf blend which depends on the PBF/PBBf mixing ratio or BF to BBf ratio in the BF/BBf copolyester. The extrusion is carried out using a twin-screw or single-screw extruder. The extruder screw speed varies from 30-200 rpm, or ≤ 100 rpm. The extruded composition is optionally pelletized and dried to obtain dry pellets for injection molding. The moisture content in the dried pellets is below 0.2%, preferably < 0.03%.

### Compounding of PBF/PBBf Blend or Copolymer of BF and BBf with Additives

A PBF/PBBf blend or copolymer of BF and BBf can be compounded with a variety of additives (e.g., fillers) as discussed above in Examples II and V. In this example, prior to extrusion, PBF, PBBf, or a copolymer of BF and BBf are air or vacuum dried at 80°C to 120°C for 4 to 8 hours. The moisture level during drying is below 0.2%, or below 0.03%. Polymers, a copolymer, and/or one or more fillers such as glass fiber, carbon fiber, talc, natural fillers, and/or other additives are melt mixed between 180°C and 280°C with the preferred extruder temperature determined by and set at slightly above the melting temperature of the PBF/PBBf blend which depends on the PBF/PBBf mixing ratio or BF to BBf ratio in the BF/BBf copolyester. The components are fed together or separately along the extruder. Preferably, fillers are fed separately using the side feeder. The extrusion is carried out using a twin-screw or single-screw extruder. The extruder screw speed varies from 30 to 200 rpm, or ≤ 100 rpm. The extruded composition is optionally pelletized and dried to obtain dry pellets for injection molding. The moisture content in the dried pellets is below 0.2%, or < 0.03%.

### Blend of PBF and PEF

In this example, prior to extrusion, PBF and PEF are air or vacuum dried at 80°C to 120°C for 4 to 8 hours. The moisture level during drying in both PBF and PEF is below 0.2%, or below 0.03%. PBF, PEF, and additives are fed together in the extruder and melt mixed under shear to obtain a PBF/PEF blend. Fillers such as glass fiber, carbon fiber, talc, or natural fillers and/or additives are added together with the PBF and PEF or separately along the extruder. The amount of PBF varies in the range of 1-99 wt%, or 1-20 wt% (e.g., 1-10 wt%, or 10-20 wt%), or 20-40 wt % (e.g., 20-30 wt%, or 30-40 wt%), or 40-60 wt % (e.g., 40-50 wt% or 50-60 wt%), or 60-80 wt% (e.g., 60-70 wt% or 70-80 wt%), or 80-99 wt% (80-90 wt%, or 90-99 wt%). The composition of filler varies from 1-60 wt%. The extruder temperature ranges from 180°C to 280°C with the preferred extruder temperature determined by and set at slightly above the melting temperature of the PBF/PEF blend. The extrusion is carried out using a twin-screw or single-screw extruder. The extruder screw speed varies from 30-200 rpm, or ≤ 100 rpm. The extruded composition is optionally pelletized and dried to obtain dry pellets for injection molding. The moisture content in the dried pellets is below 0.2%, preferably < 0.03%.

### Compounding of PBF/PEF Blend or Copolymer of BF and EF with Additives

A PBF/PEF blend or copolymer of BF and EF can be compounded with a variety of additives (e.g., fillers) as discussed above in Examples (VIII) and (IX). In this example, prior to extrusion, PBF, PEF, or a copolymer of BF and EF are air or vacuum dried at 80°C to 120°C for 4 to 8 hours. The moisture level during drying is below 0.2%, or below 0.03%. Polymers, a copolymer, and/or one or more fillers such as glass fiber, carbon fiber, talc, natural fillers, and/or other additives are melt mixed between 180°C and 280°C with the preferred extruder temperature determined by and set at slightly above the melting temperature of the PBF/PBBf blend which depends on the PBF/PEF mixing ratio or BF to EF ratio in the BF/EF copolyester. The components are fed together or separately along the extruder. Preferably, fillers are fed separately using the side feeder. The extrusion is carried out using a twin-screw or single-screw extruder. The extruder screw speed varies from 30 to 200 rpm, or ≤ 100 rpm. The extruded composition is optionally pelletized and dried to obtain dry pellets for injection molding. The moisture content in the dried pellets is below 0.2%, or < 0.03%.

### Remarks

The above description and drawings are illustrative and are not to be construed as limiting. Numerous specific details are described to provide a thorough understanding of the disclosure. However, in certain instances, well-known details are not described in order to avoid obscuring the description. Further, various modifications may be made without deviating from the scope of the embodiments.

The terms used in this description generally have ordinary meanings in the art, within the context of the disclosure, and in the specific context where each term is used. It will be appreciated that the same thing can be said in more than one way. For example, one will recognize that "resin" is one form of a "polymer" and that the terms may, on occasion, be used interchangeably.

Unless stated otherwise, generally, the term "about" is meant to encompass a variance or range of ±10%.

The use of examples anywhere in this description, including examples of any term discussed herein, are illustrative only. Likewise, the disclosure is not limited to various embodiments given in this specification.

## Claims

1. A keycap comprising one or more materials selected from the group consisting of:
a polymer of butylene 2,5-furandicarboxylate (PBF),
a polymer of butylene bifuranoate (PBBf),
a copolymer of (i) butylene 2,5-furandicarboxylate (BF) and (ii) butylene bifuranoate (BBf),
a copolymer of (i) ethylene 2,5-furandicarboxylate (EF) and (ii) one or both of BF and BBf, and
a copolymer of (i) butylene terephthalate (BT) and (ii) one or more of BF, BBf, and EF,
wherein the keycap is configured to mount on top of a switching mechanism of a key of a keyboard.

2. The keycap of claim 1, comprising
(i) PBF,
(ii) PBBf,
(iii) a blend of PBF and PBBf,
(iv) copolymer of BF and BBf,
(v) a copolymer of BT and BF, a copolymer of BT and BBf or a copolymer of BT, BF, and BBf, or
(vi) a copolymer of EF and BF, a copolymer of EF and BBf, or a copolymer of EF, BF, and BBf.

3. The keycap of claim 1, further comprising poly(butylene terephthalate) (PBT), preferably comprising
a blend of PBT and PBF, or
a blend of PBT and PBBf.

4. The keycap of claim 1, further comprising poly(ethylene 2,5-furandicarboxylate) (PEF), preferably comprising
a blend of PEF and PBF, or
a blend of PEF and PBBf.

5. The keycap of claim 1, further comprising
an additive selected from the group consisting of: an antioxidant, an ultraviolet (UV) stabilizer, a flame retardant, an anti-hydrolysis agent, a color pigment, a color changing additive for laser inscription, a lubricant, a wax, a nucleating agent, and any combination thereof,
and/or
a strengthening additive selected from the group consisting of: glass fiber, carbon fiber, talc, cellulose, bamboo, softwood, hardwood, flax, kenaf, jute, ramie, coir, kapok, sisal, henequen, abaca, hemp, bagasse, wheat straw, rice hulls, rattan, sunn, and any combination thereof.

6. The keycap of claim 5, comprising 1-60 wt% of the strengthening additive.

7. A method of injection molding a keycap, the method comprising the steps of:
obtaining one or more materials comprising:
a polymer of butylene 2,5-furandicarboxylate (PBF),
a polymer of butylene bifuranoate (PBBf),
a copolymer of (i) butylene 2,5-furandicarboxylate (BF) and (ii) butylene bifuranoate (BBf),
a copolymer of (i) ethylene 2,5-furandicarboxylate (EF) and (ii) one or both of BF and BBf,
a copolymer of (i) butylene terephthalate (BT) and (ii) one or more of BF, BBf, and EF, or
any combination thereof;
heating the one or more materials to a molten state; and
injecting the one or more materials into a mold to form the keycap.

8. The method of claim 7, wherein the one or more materials comprises:
a blend of PBF and PBBf,
a copolymer of BF and BBf,
a copolymer of BT and BF, a copolymer of BT and BBf, or a copolymer of BT, BF, and BBf,
a copolymer of EF and BF, a copolymer of EF and BBf, or a copolymer of EF, BF, and BBf,
a copolymer of BT, EF, and BF, a copolymer of BT, EF, and BBf, or a copolymer of BT, EF, BF, and BBf, or
a copolymer of BT and EF.

9. The method of claim 7, wherein the one or more materials further comprises poly(butylene terephthalate) (PBT), preferably comprising
a blend of PBT and PBF, or
a blend of PBT and PBBf.

10. The method of claim 7, wherein the one or more materials further comprise poly(ethylene 2,5-furandicarboxylate) (PEF), preferably comprising
a blend of PEF and PBF, or
a blend of PEF and PBBf.

11. The method of any one of claims 7 to 10, wherein the one or more materials further comprise:
an additive corresponding to an antioxidant, an ultraviolet (UV) stabilizer, a flame retardant, an anti-hydrolysis agent, a color pigment, a color changing additive for laser inscription, a lubricant, a wax, a nucleating agent, or any combination thereof,
and/or
a strengthening additive selected from the group consisting of: glass fiber, carbon fiber, talc, cellulose, bamboo, softwood, hardwood, lax, kenaf, jute, ramie, coir, kapok, sisal, henequen, abaca, hemp, bagasse, wheat straw, rice hulls, rattan, sunn, and any combination thereof.

12. A method for injection molding a keycap, the method comprising the steps of
- obtaining one or more materials comprising:
a polymer of butylene 2,5-furandicarboxylate (PBF),
a polymer of butylene bifuranoate (PBBf),
a blend of PBF and PBBf, or
a copolymer of (i) butylene 2,5-furandicarboxylate (BF) and (ii) butylene bifuranoate (BBf),
- melt-mixing PBF, PBBf, blend of PBF and PBBf, or copolymer of BF and BBf; and
- extruding the melt-mixed PBF, PBBf, blend of PBF and PBBf, or copolymer of BF and BBf to produce compounded pellets,
- heating the compounded pellets to a molten state to obtain one or more molten materials, and
- injecting the one or more molten materials into a mold to form the keycap.

13. The method of any one of claims 7 to 12, further comprising the step of:
annealing the formed keycap at or above 60°C thereby increasing crystallinity of the keycap.

## Patentansprüche

1. Tastenkappe, enthaltend ein oder mehrere Materialien, ausgewählt aus der Gruppe bestehend aus:
einem Polymer aus Butylen-2,5-furandicarboxylat (PBF),
einem Polymer aus Butylenbifuranoat (PBBf),
einem Copolymer aus (i) Butylen-2,5-furandicarboxylat (BF) und (ii) Butylenbifuranoat (BBf),
einem Copolymer aus (i) Ethylen-2,5-furandicarboxylat (EF) und (ii) einem oder beiden der Stoffe BF und BBf, sowie
einem Copolymer aus (i) Butylenterephthalat (BT) und (ii) einem oder mehreren der Stoffe BF, BBf und EF,
wobei die Tastenkappe so konfiguriert ist, dass sie auf einem Schaltmechanismus einer Taste einer Tastatur angebracht werden kann.

2. Tastenkappe nach Anspruch 1, enthaltend
(i) PBF,
(ii) PBBf,
(iii) eine Mischung aus PBF und PBBf,
(iv) ein Copolymer aus BF und BBf,
(v) ein Copolymer aus BT und BF, ein Copolymer aus BT und BBf oder ein Copolymer aus BT, BF und BBf, oder
(vi) ein Copolymer aus EF und BF, ein Copolymer aus EF und BBf oder ein Copolymer aus EF, BF und BBf.

3. Tastenkappe nach Anspruch 1, die ferner Poly(butylenterephthalat) (PBT) enthält, vorzugsweise enthaltend
eine Mischung aus PBT und PBF, oder
eine Mischung aus PBT und PBBf.

4. Tastenkappe nach Anspruch 1, die ferner Poly(ethylen-2,5-furandicarboxylat) (PEF) enthält, vorzugsweise enthaltend
eine Mischung aus PEF und PBF, oder
eine Mischung aus PEF und PBBf.

5. Tastenkappe nach Anspruch 1, die ferner enthält
einen Zusatzstoff, ausgewählt aus der Gruppe bestehend aus: einem Antioxidationsmittel, einem Ultraviolett (UV)-Stabilisator, einem Flammschutzmittel, einem Hydrolyseschutzmittel, einem Farbpigment, einem farbwechselnden Zusatzstoff für die Laserbeschriftung, einem Gleitmittel, einem Wachs, einem Keimbildner und einer beliebigen Kombination davon,
und/oder
einen verstärkenden Zusatzstoff, ausgewählt aus der Gruppe bestehend aus: Glasfaser, Kohlefaser, Talkum, Zellulose, Bambus, Weichholz, Hartholz, Flachs, Kenaf, Jute, Ramie, Kokosfaser, Kapok, Sisal, Henequén, Abacá, Hanf, Bagasse, Weizenstroh, Reisschalen, Rattan, Sonnenhanf und beliebigen Kombinationen davon.

6. Tastenkappe nach Anspruch 5, die 1 bis 60 Gew.-% des verstärkenden Zusatzes enthält.

7. Verfahren zum Spritzgießen einer Tastenkappe, wobei das Verfahren die folgenden Schritte umfasst: Bereitstellen eines oder mehrerer Materialien, die Folgendes umfassen:
ein Polymer aus Butylen-2,5-furandicarboxylat (PBF),
ein Polymer aus Butylenbifuranoat (PBBf),
ein Copolymer aus (i) Butylen-2,5-furandicarboxylat (BF) und (ii) Butylenbifuranoat (BBf),
ein Copolymer aus (i) Ethylen-2,5-furandicarboxylat (EF) und (ii) einem oder beiden der Stoffe BF und BBf,
ein Copolymer aus (i) Butylenterephthalat (BT) und (ii) einem oder mehreren der Stoffe BF, BBf und EF oder
einer beliebigen Kombination davon;
Erhitzen des einen oder der mehreren Materialien auf einen Schmelzzustand; und
Einspritzen des einen oder der mehreren Materialien in eine Form, um die Tastenkappe zu formen.

8. Verfahren nach Anspruch 7, wobei das eine oder die mehreren Materialien Folgendes umfassen:
eine Mischung aus PBF und PBBf,
ein Copolymer aus BF und BBf,
ein Copolymer aus BT und BF, ein Copolymer aus BT und BBf oder ein Copolymer aus BT, BF und BBf,
ein Copolymer aus EF und BF, ein Copolymer aus EF und BBf oder ein Copolymer aus EF, BF und BBf,
ein Copolymer aus BT, EF und BF, ein Copolymer aus BT, EF und BBf oder ein Copolymer aus BT, EF, BF und BBf oder
ein Copolymer aus BT und EF.

9. Verfahren nach Anspruch 7, wobei das eine oder die mehreren Materialien ferner Poly(butylenterephthalat) (PBT) enthalten, vorzugsweise enthaltend
eine Mischung aus PBT und PBF, oder
eine Mischung aus PBT und PBBf.

10. Verfahren nach Anspruch 7, wobei das eine oder die mehreren Materialien ferner Poly(ethylen-2,5-furandicarboxylat) (PEF) enthalten, vorzugsweise enthaltend
eine Mischung aus PEF und PBF, oder
eine Mischung aus PEF und PBBf.

11. Verfahren nach einem der Ansprüche 7 bis 10, wobei das eine oder die mehreren Materialien ferner Folgendes enthalten:
einen Zusatzstoff, der einem Antioxidationsmittel, einem Ultraviolett (UV)-Stabilisator, einem Flammschutzmittel, einem Hydrolyseschutzmittel, einem Farbpigment, einem farbwechselnden Zusatzstoff für die Laserbeschriftung, einem Gleitmittel, einem Wachs, einem Keimbildner oder einer beliebigen Kombination davon entspricht,
und/oder
einen verstärkenden Zusatzstoff, ausgewählt aus der Gruppe bestehend aus: Glasfaser, Kohlefaser, Talkum, Zellulose, Bambus, Weichholz, Hartholz, Flachs, Kenaf, Jute, Ramie, Kokosfaser, Kapok, Sisal, Henequén, Abacá, Hanf, Bagasse, Weizenstroh, Reisschalen, Rattan, Sonnenhanf und einer beliebigen Kombination davon.

12. Verfahren zum Spritzgießen einer Tastenkappe, wobei das Verfahren die folgenden Schritte umfasst:
- Bereitstellen eines oder mehrerer Materialien, bestehend aus:
ein Polymer aus Butylen-2,5-furandicarboxylat (PBF),
ein Polymer aus Butylenbifuranoat (PBBf),
eine Mischung aus PBF und PBBf oder
ein Copolymer aus (i) Butylen-2,5-furandicarboxylat (BF) und (ii) Butylenbifuranoat (BBf),
- Schmelzmischen von PBF, PBBf, einer Mischung aus PBF und PBBf oder eines Copolymers aus BF und BBf; und
- Extrudieren des schmelzgemischten PBF, PBBf, der Mischung aus PBF und PBBf, oder des Copolymers aus BF und BBf zur Herstellung von compoundierten Pellets,
- Erhitzen der compoundierten Pellets bis zum Schmelzzustand, um ein oder mehrere geschmolzene Materialien zu erhalten, und
- Einspritzen des einen oder der mehreren geschmolzenen Materialien in eine Form zur Herstellung der Tastenkappe.

13. Verfahren nach einem der Ansprüche 7 bis 12, das ferner den folgenden Schritt umfasst:
Glühen der geformten Tastenkappe bei einer Temperatur von 60 °C oder höher, wodurch die Kristallinität der Tastenkappe erhöht wird.

## Revendications

1. Dessus de touche comprenant un ou plusieurs matériaux sélectionnés dans le groupe constitué des suivants :
un polymère de 2,5-furandicarboxylate de butylène (PBF),
un polymère de bifuranoate de butylène (PBBf),
un copolymère de i) 2,5-furandicarboxylate de butylène (BF) et de ii) bifuranoate de butylène (BBf),
un copolymère de i) 2,5-furandicarboxylate d'éthylène (EF) et ii) de l'un ou deux parmi BF et BBf, et
un copolymère de i) téréphtalate de butylène (BT) et de ii) l'un ou plusieurs parmi BF, BBf, et EF,
dans lequel le dessus de touche est configuré pour être monté au-dessus d'un mécanisme de commutation d'une touche d'un clavier.

2. Dessus de touche selon la revendication 1, comprenant :
i) du PBF,
i) du PBBf,
iii) un mélange de PBF et de PBBf,
iv) un copolymère de BF et de BBf,
v) un copolymère de BT et de BF, un copolymère de BT et de BBf ou un copolymère de BT, de BF et de BBf, ou
vi) un copolymère d'EF et de BF, un copolymère d'EF et de BBf, ou un copolymère d'EF, de BF et de BBf.

3. Dessus de touche selon la revendication 1, comprenant en outre du poly(téréphtalate de butylène) (PBT), comprenant de préférence
un mélange de PBT et de PBF, ou
un mélange de PBT et de PBBf.

4. Dessus de touche selon la revendication 1, comprenant en outre du poly(2,5-furandicarboxylate d'éthylène) (PEF), comprenant de préférence
un mélange de PEF et de PBF, ou
un mélange de PEF et de PBBf.

5. Dessus de touche selon la revendication 1, comprenant en outre :
un additif sélectionné dans le groupe comprenant un antioxydant, un stabilisant aux ultraviolets (UV), un retardateur de flamme, un agent anti-hydrolyse, un pigment de couleur, un additif modifiant la couleur pour une inscription au laser, un lubrifiant, une cire, un agent de nucléation, et toute combinaison de ceux-ci,
et/ou
un additif de renforcement sélectionné parmi le groupe comprenant de la fibre de verre, de la fibre de carbone, du talc, de la cellulose, du bambou, du bois tendre, du bois dur, du lin, du kénaf, du jute, de la ramie, du coir, du kapok, du sisal, de l'henequen, de l'abaca, du chanvre, de la bagasse, de la paille de blé, des écorces de riz, du rotin, du chanvre sunn et toute combinaison d'entre eux.

6. Dessus de touche selon la revendication 5, comprenant 1 à 60 % en poids de l'additif de renforcement.

7. Procédé de moulage par injection d'un dessus de touche, le procédé comprenant les étapes suivantes :
l'obtention d'un ou plusieurs matériaux comprenant :
un polymère de 2,5-furandicarboxylate de butylène (PBF),
un polymère de bifuranoate de butylène (PBBf),
un copolymère de i) 2,5-furandicarboxylate de butylène (BF) et de ii) bifuranoate de butylène (BBf),
un copolymère de i) 2,5-furandicarboxylate d'éthylène (EF) et de ii) l'un ou les deux parmi BF et BBf,
un copolymère de i) téréphtalate de butylène (BT) et de ii) un ou plusieurs parmi BF, BBf et EF, ou
une quelconque combinaison de ceux-ci,
le chauffage de l'un ou plusieurs matériaux jusqu'à un état fondu, et
l'injection de l'un ou plusieurs des matériaux dans un moule pour former le dessus de touche.

8. Procédé selon la revendication 7, dans lequel l'un ou plusieurs des matériaux comprennent :
un mélange de PBF et de PBBf,
un copolymère de BF et de BBf,
un copolymère de BT et de BF, un copolymère de BT et de BBf ou un copolymère de BT, de BF et de BBf,
un copolymère d'EF et de BF, un copolymère d'EF et de BBf ou un copolymère d'EF, de BF et de BBf,
un copolymère de BT, d'EF et de BF, un copolymère de BT, d'EF et de BBf ou un copolymère de BT, d'EF, de BF et de BBf, ou
un copolymère de BT et d'EF.

9. Procédé selon la revendication 7, dans lequel l'un ou plusieurs matériaux comprennent en outre du poly(téréphtalate de butylène) (PBT), comprenant de préférence
un mélange de PBT et de PBF, ou
un mélange de PBT et de PBBf.

10. Procédé selon la revendication 7, dans lequel l'un ou plusieurs matériaux comprennent en outre du poly(2,5-furandicarboxylate d'éthylène) (PEF), comprenant de préférence
un mélange de PEF et de PBF, ou
un mélange de PEF et de PBBf.

11. Procédé selon l'une quelconque des revendications 7 à 10, dans lequel l'un ou plusieurs matériaux comprennent en outre :
un additif correspondant à un antioxydant, un stabilisant aux ultraviolets (UV), un retardateur de flamme, un agent anti-hydrolyse, un pigment de couleur, un additif modifiant la couleur pour une inscription au laser, un lubrifiant, une cire, un agent de nucléation, ou une quelconque combinaison d'entre eux,
et/ou
un additif de renforcement sélectionné parmi le groupe comprenant : de la fibre de verre, de la fibre de carbone, du talc, de la cellulose, du bambou, du bois tendre, du bois dur, du lin, du kénaf, du jute, de la ramie, du coir, du kapok, du sisal, de l'henequen, de l'abaca, du chanvre, de la bagasse, de la paille de blé, des écorces de riz, du rotin, du chanvre sunn et une quelconque combinaison d'entre eux.

12. Procédé de moulage par injection d'un dessus de touche, le procédé comprenant les étapes suivantes :
- l'obtention d'un ou plusieurs matériaux comprenant :
un polymère de 2,5-furandicarboxylate de butylène (PBF),
un polymère de bifuranoate de butylène (PBBf),
un mélange de PBF et de PBBf, ou
un copolymère de i) 2,5-furandicarboxylate de butylène (BF) et de ii) bifuranoate de butylène (BBf),
- le mélange à l'état fondu du PBF, du PBBf, du mélange de PBF et de PBBf, ou du copolymère de BF et de BBf, et
- l'extrusion du PBF, du PBBf, du mélange de PBF et de PBBf, ou du copolymère de BF et de BBf mélangé à l'état fondu, afin de produire des granulés obtenus par compoundage,
- le chauffage des granulés jusqu'à l'état fondu, afin d'obtenir un ou plusieurs matériaux fondus, et
- l'injection de l'un ou plusieurs matériaux fondus dans un moule pour former le dessus de touche.

13. Procédé selon l'une quelconque des revendications 7 à 12, comprenant en outre l'étape suivante :
le recuit du dessus de touche formé à une température égale ou supérieure à 60 °C afin d'augmenter ainsi la cristallinité du dessus de touche.
